# EUROPÄISCHE PATENTSCHRIFT

(11) **EP 2 914 407 B1**
(45) Veröffentlichungstag und Bekanntmachung des Hinweises auf die Patenterteilung: **09.03.2016**
(21) Anmeldenummer: 13745411.2
(22) Anmeldetag: 05.08.2013
(51) Int. Cl.: B29C 43/22, B29C 43/46, B29C 47/00, B29C 47/90

(54) **VERFAHREN UND VORRICHTUNG ZUM HERSTELLEN EINES UMREIFUNGSBANDES**
PROCESS AND DEVICE FOR MAKING A STRAP
PROCÉDÉ ET APPAREIL POUR LA FABRICATION D'UNE COURROIE

(30) Priorität: 30.10.2012 DE 102012110396
(43) Veröffentlichungstag der Anmeldung: 09.09.2015
(73) Patentinhaber: TITAN Umreifungstechnik GmbH & Co.KG, 58332 Schwelm (DE)
(72) Erfinder: LENZEN, Peter Wilhelm, 45549 Sprockhövel (DE)
(74) Vertreter: Nunnenkamp, Jörg
(86) Internationale Anmeldenummer: PCT/EP2013/066386
(87) Internationale Veröffentlichungsnummer: WO 2014/067681

(56) Entgegenhaltungen:
- GB-A- 1 108 766
- US-A- 2 478 454
- US-A- 3 479 852
- US-A- 4 395 214
- DATABASE WPI Week 200306 Thomson Scientific, London, GB; AN 2003-061498 XP002720742, -& JP 2002 248672 A (YOKOHAMA RUBBER CO LTD) 3. September 2002 (2002-09-03)

## Beschreibung

Die Erfindung betrifft ein Verfahren und eine zugehörige Vorrichtung zum Herstellen eines Umreifungsbandes aus Kunststoff, wonach Granulat des eingesetzten Kunststoffes erhitzt und in Längsrichtung zu einem Streifenband extrudiert wird.

Ein Verfahren der eingangs beschriebenen Ausprägung wird beispielsweise in der EP 1 501 885 B1 beschrieben. Hier geht es um eine Umreifung, die durch Recken in einer Längsrichtung der Umreifung molekular orientiert wurde. Als Kunststoff zur Herstellung des bekannten Umreifungsbandes bzw. der Umreifung kommt eine Mischung aus Polyester und einem Polyolefin zum Einsatz, wobei Polyester den größten Bestandteil darstellt. Das hat sich prinzipiell bewährt.

Darüber hinaus ist es bei einem vergleichbaren Verfahren entsprechend der DE 1 704 986 B2 bekannt geworden, das aus einem Extruder austretende unprofilierte Band nach seiner Kühlung in einem Verfestigungsbad zur Erzeugung von Riefen und Rippen zu profilieren. Dabei erfährt das hergestellte Streifenband außerdem ein Recken in Längsrichtung, und zwar vor dem Profilieren.

Oberflächenprofilierungen bei Kunststoffbändern werden im Allgemeinen eingesetzt, um die Festigkeit des Kunststoffbandes zu erhöhen. Dadurch kann ein Kunststoffband bzw. Kunststoffumreifungsband bei vorgegebener Banddicke mit einer höheren Festigkeit im Vergleich zu einer Ausführungsform ohne Profilierung bzw. Oberflächenprägung ausgerüstet werden. Umgekehrt ist es natürlich auch möglich, bei vorgegebener Festigkeit durch die Profilierung den Materialeinsatz zu verringern (vgl. EP 1 129 946 B1).

Die DE 1 704 986 B2 befasst sich mit einem Verfahren und einer Vorrichtung zum Herstellen eines in Längs- und Querrichtung gereckten dünnen Spannbandes aus Kunststoff. Das Band verfügt beidseitig in Längsrichtung über schmale Riefen und dazwischen angeordnete Rippen. Auf diese Weise soll eine bessere Reißfestigkeit erzielt werden.

Die DE 10 2009 018 832 A1 befasst sich mit einem beschichteten Träger, insbesondere Holzwerkstoff oder Schaumglasträger. In diesem Zusammenhang kann auch eine Kantenbearbeitung durch Abrunden der scharfen Kantenteile erfolgen, allerdings bei dem insofern zuvor realisierten Fertigprodukt.

Im Rahmen der US 4 395 214 A geht es um die Herstellung von Kunststoffplatten, die beispielsweise als Tischplatte, Kunststoffbarren etc. zum Einsatz kommen können. Zur Formgebung der durch Extrusion hergestellten Kunststoffplatten kommen seitliche Rollen für die Längskanten zum Einsatz.

Das Auf- oder Anbringen von Profilierungen bei Umreifungsbändern aus Kunststoff ist jedoch verfahrenstechnisch nicht einfach zu realisieren. Denn die jeweiligen Streifenbänder verfügen typischerweise über eine Breite von bis zu 40 mm, sind also relativ schmal. Wenn man dann noch die an dieser Stelle realisierten Verarbeitungsgeschwindigkeiten von mehreren Metern pro Sekunde berücksichtigt, wird deutlich, dass Breitenschwankungen des Streifenbandes oftmals beobachtet werden. Dies auch deshalb, weil das extrudierte Streifenband nicht gleichmäßig über seinen Querschnitt gesehen abkühlt.

Solche Breitenschwankungen führen jedoch im Ergebnis dazu, dass die Oberflächenprägungen kaum reproduzierbar und an gleichbleibender Stelle auf der jeweils auszurüstenden Oberfläche angebracht werden können. Dadurch lassen sich die gewünschten Effekte wie eine Erhöhung der Steifigkeit und auch das vereinfachte Einschießen in einen Führungskanal einer Umreifungsmaschine praktisch nicht definiert realisieren.

Hinzu kommt, dass Umreifungsbänder aus Kunststoff an ihren Rändern bzw. Längskanten oftmals zum "Ausfransen" neigen. Tatsächlich werden in diesem Kontext insbesondere bei mikroskopischen Untersuchungen Vorsprünge, Haken oder sogar Widerhaken beobachtet, die das zu umreifende Gut schädigen können. Das gilt insbesondere für zu umreifende Umhüllungen, die mediendicht geschlossen sind und dies auch bleiben sollen. Etwaige Haken an den Längskanten der Umreifungsbänder können nun allerdings dazu führen, dass die geschlossene Umhüllung beschädigt wird, was unerwünscht ist. Hier will die Erfindung insgesamt Abhilfe schaffen.

Der Erfindung liegt das technische Problem zugrunde, ein derartiges Verfahren und eine zugehörige Vorrichtung so weiterzuentwickeln, dass das realisierte Umreifungsband aus Kunststoff über definierte und reproduzierbare Eigenschaften verfügt und Beschädigungen des umreiften Gutes zuverlässig vermieden werden.

Zur Lösung dieser technischen Problemstellung ist Gegenstand der Erfindung ein Verfahren nach Anspruch 1, außerdem eine Vorrichtung zur Durchführung des Verfahrens nach Anspruch 6. Vorteilhafte Weiterbildungen sind in den Unteransprüchen offenbart.

Mit Hilfe der Arrondierrollen wird die jeweilige Längskante des Streifenbandes abgerundet. Damit dies problemlos gelingt, versteht es sich, dass das Streifenband zum Zeitpunkt der Abrundung seiner Längskanten noch nicht vollständig abgekühlt ist, sondern vielmehr eine Temperatur nach dem Extrusionsvorgang von ca. 50 °C bis 100 °C aufweist, welche die Abrundung an den Kanten begünstigt bzw. erst ermöglicht. Denn in diesem Temperaturbereich ist das fragliche Streifenband aus Kunststoff typischerweise (noch) plastisch verformbar, so dass insbesondere eine schleifende Bearbeitung in diesem Zusammenhang entbehrlich ist und ohnehin kontraproduktiv wäre. Vielmehr reicht es aus, die jeweils abzurundende Längskante durch einen Bearbeitungsschlitz der mehreren Arrondierrollen hindurchzuführen. Der Bearbeitungsschlitz gibt dabei regelmäßig mit seiner Querschnittskontur die anschließende Querschnittskontur des Streifenbandes im Bereich der Längskante vor.

In diesem Zusammenhang versteht es sich, dass prinzipiell beliebige Querschnittskonturen im Bereich der jeweiligen Längskante mit Hilfe der einen oder der mehreren Arrondierrollen realisiert werden können. Es muss jeweils nur gewährleistet werden, dass die Längskante die gewünschte Abrundung erfährt und insbesondere keine irgendwie gearteten Vorsprünge, Haken oder gar Widerhaken mehr beobachtet werden. Meistens hat es sich hier bewährt, wenn die jeweilige Längskante in etwa halbkreisförmig abgerundet wird.

Darüber hinaus empfiehlt die Erfindung, die jeweilige Längskante nicht nur abzurunden, sondern zugleich eine Beaufschlagung mit einer Seitenkraft vorzunehmen. Die Seitenkraft ist dabei meistens senkrecht zur Längskante gegen diese gerichtet, und zwar im Wesentlichen ebengleich zur Bandebene. Dadurch, dass das Streifenband an seiner jeweiligen Längskante mit der fraglichen Seitenkraft beaufschlagt wird, kann zugleich die Breite des Streifenbandes eingestellt und vorgegeben werden. Das heißt, die Beaufschlagung mit der Seitenkraft führt zugleich zur Breiteneinstellung des Streifenbandes insgesamt. Dabei wird man meistens so arbeiten, dass die sich gegenüberliegenden Längskanten mit jeweils entgegengesetzt gerichteten Seitenkräften beaufschlagt werden, folglich das Streifenband in Querrichtung durch die sich gegenüberliegenden Arrondierrollen eine ergänzende Stauchung zusätzlich zur Abrundung der Längskanten erfährt.

Meistens wirkt die Seitenkraft als elastische Gegenkraft einer Feder gegenüber der hieran entlanggeführten Längskante des Streifenbandes. Das heißt, bei der Seitenkraft handelt es sich regelmäßig um eine elastische Federkraft. Diese ist als Gegenkraft gegenüber der hieran entlanggeführten Längskante ausgelegt. Sobald also die Längskante des Streifenbandes in Richtung auf die Feder ausgelenkt wird, baut diese eine der Auslenkung entsprechende Gegenkraft auf und drückt die Längskante entsprechend zurück.

In diesem Zusammenhang kann in einer Weiterbildung insgesamt sogar so vorgegangen werden, dass den beidseitigen Arrondierrollen jeweilige Stelltriebe und eine Steuereinheit zugeordnet sind. Dadurch lässt sich das Streifenband insgesamt hinsichtlich seiner Breite definiert einstellen. Das kann im Zuge einer Steuerung oder auch einer Regelung erfolgen. Im letztgenannten Fall ist den Arrondierrollen bzw. einer an dieser Stelle realisierten Arrondiervorrichtung regelmäßig noch ein Sensor zugeordnet, welcher vor der Arrondiervorrichtung die Breite des jeweils zugeführten Streifenbandes ermittelt.

Je nach dessen in die Steuereinheit eingespeisten Messwerten für die Breite des Streifenbandes werden dann die Arrondierrollen bzw. werden deren Stelltriebe entsprechend beaufschlagt, um ausgangsseitig der Arrondiervorrichtung ein Streifenband durchgängig gleicher Breite zur Verfügung zu stellen. Tatsächlich können auf diese Weise bisher in der Praxis beobachtete Breitenschwankungen der Umreifungsbänder im Bereich von ± 0,3 mm erfindungsgemäß auf Werte von deutlich unterhalb von ± 0,1 mm verringert werden. Zugleich mit dieser Breiteneinstellung des Streifenbandes erfahren die Längskanten die beschriebene Glättung, so dass ausgangsseitig der Arrondiervorrichtung ein Streifenband zur Verfügung steht, welches definierte Abmessungen und folglich entsprechende mechanische Eigenschaften aufweist.

Dadurch besteht im Rahmen der Erfindung die grundsätzliche Möglichkeit, das Streifenband vor und/oder nach und/oder während der Abrundung seiner jeweiligen Längskante an wenigstens einer Oberfläche zu profilieren. Meistens wird man hier mit einer Profilierung an beiden Oberflächen des Streifenbandes arbeiten. Außerdem hat es sich bewährt, die Profilierung mit der Abrundung zu kombinieren, das heißt, die Profilierung vor und/oder während der Abrundung vorzunehmen. Auf diese Weise können etwaige Materialverdrängungen im Zuge der Profilierung, die eventuell zu einer Breitenzunahme führen, unmittelbar durch die gleichzeitige bzw. anschließende Abrundung und Breiteneinstellung mit Hilfe der Arrondiervorrichtung ausgeglichen werden.

Dabei versteht es sich, dass die beschriebenen Vorgänge der Profilierung und Abrundung jeweils in einem Zustand des Streifenbandes erfolgen, welcher eine entsprechende Verformung zulässt. Hierzu gehören typischerweise Temperaturen des Streifenbandes von in etwa 50 °C bis 100 °C, je nach eingesetztem Kunststoff oder verwendeter Kunststoffmischung.

Dabei ist es nach einer ersten Variante möglich, eine Profilierungseinrichtung und die Arrondiervorrichtung jeweils in einem solchen Abstand hinter einem Extruder zu platzieren, dass das Streifenband die erforderliche Temperatur (noch) aufweist. Selbstverständlich ist es ergänzend auch denkbar, das Streifenband vorher in einem durchlaufenen Ofen bei Bedarf wieder aufzuheizen. Ganz abgesehen davon können die Profilierungseinrichtung und/oder die Arrondiervorrichtung beheizt werden. Außerdem liegt es im Rahmen der Erfindung, das Streifenband vor der Profilierung und der Abrundung an einer oder beiden Längskanten in Längsrichtung zu recken, um eine molekulare Orientierung in dieser Längsrichtung zur Verfügung zu stellen. Durch diese molekulare Orientierung wird ein Aufspalten oder Aufspleißen der jeweils hergestellten Streifenbänder vermieden.

Der Reckvorgang sollte im Übrigen der Profilierung, Abrundung und Breiteneinstellung schon deshalb vorgeschaltet sein, weil er nicht nur mit einer Abnahme der Materialdicke des Streifenbandes, sondern auch mit einer Breitenabnahme verbunden ist. Um an dieser Stelle ein definiertes Ausgangsprodukt zur Verfügung zu stellen, ist es erforderlich, an den Reckvorgang die Profilierung und dann die Abrundung inklusive Breiteneinstellung anzuschließen. Dabei können die Profilierung und Abrundung/Breiteneinstellung auch miteinander kombiniert werden, wie dies bereits angesprochen wurde.

Im Ergebnis werden ein Verfahren und eine zugehörige Vorrichtung zum Herstellen eines Umreifungsbandes beschrieben, mit dessen bzw. deren Hilfe ein Umreifungsband in einer bisher nicht für möglich gehaltenen Qualität reproduzierbar hergestellt werden kann. Tatsächlich verfügt das erfindungsgemäße Umreifungsband über eine gegenüber dem Stand der Technik deutlich gesteigerte Dimensionsstabilität, weist also einen durchgängig gleichen (meistens rechteckförmigen) Querschnitt auf. Hinzu kommt, dass die abgerundeten Längskanten des Streifenbandes etwaige Beschädigungen des hiermit umreiften Gutes von vornherein ausschließen.

Sofern an dieser Stelle zusätzlich mit Oberflächenprofilierungen gearbeitet wird, lassen sich die Oberflächenprofilierungen definiert auf der Oberfläche platzieren. Insbesondere können problemlos symmetrische Gestaltungen dieser Oberflächenprofilierungen im Vergleich zu einer Längssymmetrieachse umgesetzt werden. Als Folge hiervon kann auch ein gewünschter Abstand der Profilierung von der Längskante nachvollziehbar und wiederholt eingestellt werden.

Die Lage und Ausprägung der Oberflächenprofilierungen folgt den Vorgaben zu diesem Zweck eingesetzter Profilierwalzen, sowohl was die Ausrichtung und Ausdehnung im Vergleich zu der Längssymmetrieachse des Streifenbandes angeht als auch im Hinblick auf etwaige freibleibende Ränder von der Oberflächenprofilierung bis zur Längskante des Streifenbandes.

Damit kann ein Umreifungsband mit gewünschtem Querschnitt und einer Materialstärke realisiert werden, die sich an den Oberflächenprofilierungen orientiert bzw. hiervon ausgehend gemessen wird. Da zwischen den einzelnen Oberflächenprofilierungen respektive zugehörigen Rippen Leerräume beobachtet werden, führt dies im Ergebnis zu einer signifikanten Materialersparnis im Vergleich zu Umreifungsbändern ohne Oberflächenprägungen und mit durchgängigem Querschnitt. Da die Oberflächenprägungen zugleich die Festigkeit erhöhen, werden ähnliche mechanische Werte für das erfindungsgemäße Umreifungsband wie bei herkömmlichen Umreifungsbändern ohne Oberflächenprofilierung beobachtet.

Die erzielbare Materialersparnis ist bedeutend und kann je nach Auslegung der Oberflächenprägung und dem damit verbundenen Querschnitt des erfindungsgemäßen Umreifungsbandes Werte von 10 % und mehr im Vergleich zu einem Umreifungsband mit durchgängig gleichem Querschnitt einnehmen. Dadurch wird Material eingespart, was insgesamt die Kosten senkt. Dies umso mehr, als die zusätzlich erforderliche Profilierungseinrichtung und Arrondiervorrichtung einfach und kostengünstig bei einer Extrusionsvorrichtung ergänzt werden können. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Vorrichtung zum Herstellen eines Umreifungsbandes schematisch,
- Fig. 2A-2D: unterschiedliche Ausgestaltungen der Arrondiervorrichtung und
- Fig. 3: die Profilierungseinrichtung bzw. deren zugehörige Profilierwalzen in einer Seitenansicht mit dem dazwischen befindlichen Streifenband.

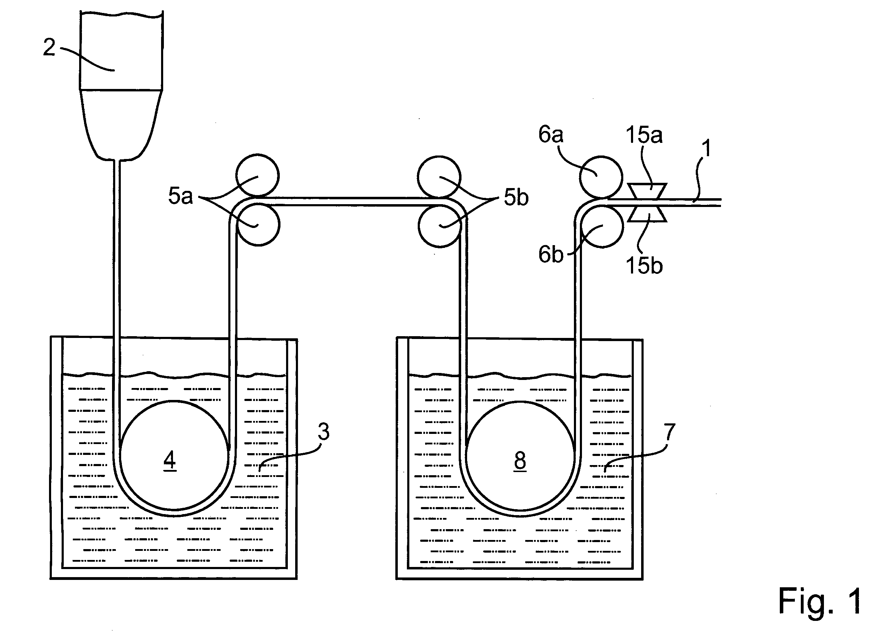

In der Fig. 1 ist die erfindungsgemäße Vorrichtung zum Herstellen eines Umreifungsbandes 1 aus Kunststoff dargestellt. Im Detail verfügt die Vorrichtung über einen Extruder 2 für darin erschmolzenes Granulat aus Kunststoff. Bei dem Granulat aus Kunststoff kann es sich um übliche thermoplastische Kunststoffe wie beispielsweise Polyester, Polyethylen, Polypropylen oder andere Polyolefine handeln. Selbstverständlich können auch Kombinationen zum Einsatz kommen, ebenso wie sogenannte "recycling flakes" wie sie grundsätzlich in der EP 1 501 885 B1 beschrieben werden. Jedenfalls sorgt der Extruder 2 dafür, dass das Granulat aus dem gewünschten Kunststoff erschmolzen wird und als extrudiertes Streifenband bzw. Umreifungsband 1 den Extruder 2 verlässt. Zu diesem Zweck weist der Extruder 2 eine Temperatur von typischerweise 260 °C bis 290 °C auf.

Vorliegend wird jeweils ein Streifenband bzw. Umreifungsband 1 als Einzelstreifenband hergestellt. Das fragliche Streifenband bzw. Umreifungsband 1 verfügt in diesem Zusammenhang über eine Breite von 5 mm bis 40 mm und eine Materialdicke von 0,2 mm bis 3 mm.

Das den Extruder 2 verlassene Streifenband 1 wird danach in ein Verfestigungs- oder Abkühlbad 3 überführt und mag mit Hilfe einer im Verfestigungsbad 3 befindlichen Tauchwalze 4 umgelenkt werden. Im Anschluss daran wird das Streifenband 1 Walzenpaaren 5a, 5b zugeführt. Zwischen diesen Walzenpaaren 5a, 5b wird das Streifenband 1 gereckt. Tatsächlich beobachtet man an dieser Stelle Reckgrade von dem 3-fachen bis 7-fachen der Ausgangslänge. Das ist möglich, weil das Streifenband 1 in diesem Reckbereich eine Temperatur im Bereich von ca. 130 °C bis 170 °C aufweist.

Bei dem Reckvorgang mit Hilfe des Walzenpaares 5a, 5b wird beispielhaft so gearbeitet, dass sich das Walzenpaar 5b mit einer in etwa 5 bis 8-fachen Umfangsgeschwindigkeit im Verhältnis zum Walzenpaar 5a dreht. Dadurch erfährt das Umreifungsband 1 eine erhebliche Querschnittsverminderung und wird gleichzeitig in seiner Längsrichtung gereckt.

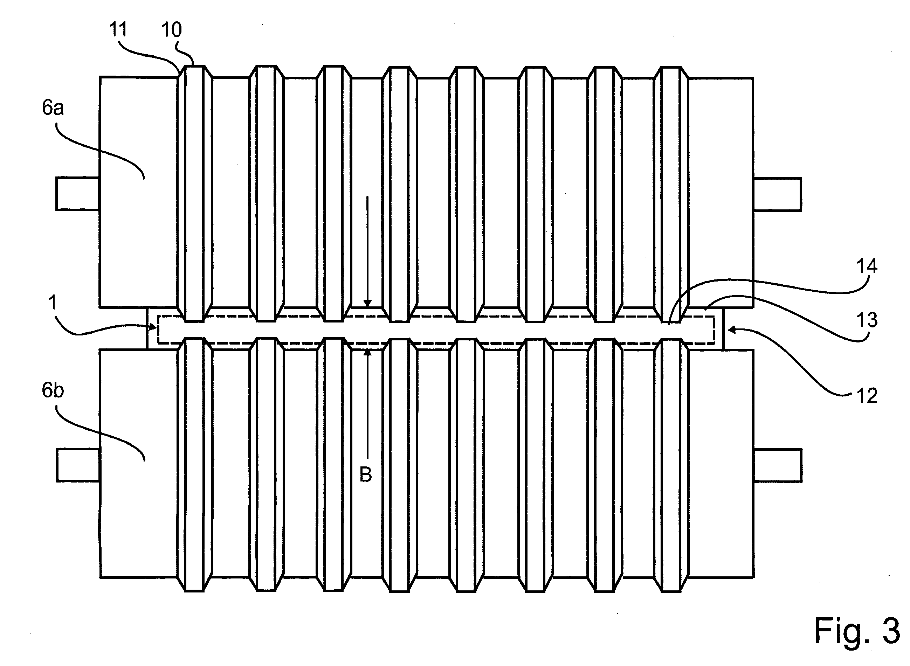

Nach dem Recken wird das Streifenband 1 profiliert. Hierzu ist eine Profilierungseinrichtung 6a, 6b vorgesehen, die sich im Ausführungsbeispiel aus zwei im Vergleich zum mittigen Streifenband 1 gegenüberliegenden Profilierwalzen 6a, 6b zusammensetzt. Das wird anhand einer vergleichenden Betrachtung der Fig. 1 und 3 deutlich.

Bevor das Streifenband 1 die Profilierungseinrichtung 6a, 6b erreicht, wird es nach dem Ausführungsbeispiel durch ein weiteres Verfestigungsbad 7 mit zusätzlicher Tauchwalze 8 geführt. Das Verfestigungsbad 7 ist ebenso wie die Tauchwalze 8 grundsätzlich entbehrlich. Das gilt auch für die gleichsam vorgeschaltete Reckvorrichtung 5a, 5b bzw. die beiden zugehörigen Walzenpaare 5a, 5b. Außerdem handelt es sich bei der Profilierungseinrichtung 6a, 6b um eine Option und keinen zwingenden Bestandteil der Vorrichtung.

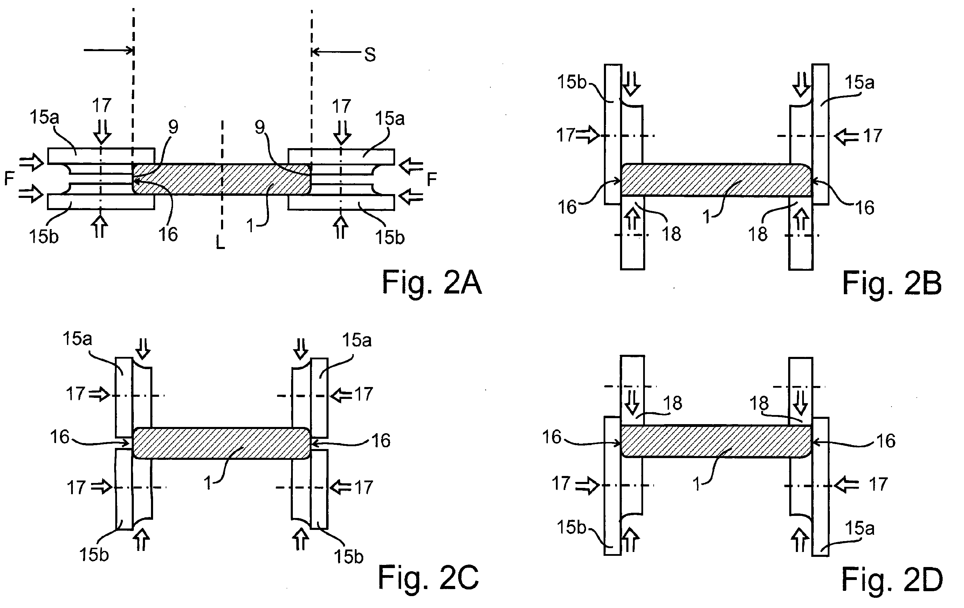

Das heißt, das Umreifungsband bzw. Streifenband 1 kann im Rahmen der Erfindung auch ohne Oberflächenprofilierung und ohne Recken hergestellt werden. Im dargestellten Ausführungsbeispiel wird das Streifenband bzw. Umreifungsband 1 jedoch zunächst gereckt, dann profiliert und abschließend an wenigstens einer Längskante 9 abgerundet, wie anschließend und mit Bezug zu den Fig. 2A bis 2D noch näher erläutert wird.

In der Fig. 3 sind die beiden in Bezug auf das mittig hindurch geführte Streifenband 1 sich gegenüberliegenden Profilierwalzen 6a, 6b im Detail dargestellt. Man erkennt, dass die jeweilige Profilierwalze 6a, 6b zylindrisch ausgebildet ist und an ihrer Oberfläche mit konzentrisch zur Walzenachse umlaufenden Rippen 10 ausgerüstet ist. Im dargestellten Beispiel verfügen die Rippen 10 über jeweils schräge Rippenflanken 11. Das ist selbstverständlich nur beispielhaft und nicht zwingend zu verstehen. Da das Streifenband bzw. Umreifungsband 1 durch einen Bearbeitungsschlitz 12 zwischen den beiden Profilierwalzen 6a, 6b hindurchgeführt wird, verfügt das Streifenband bzw. Umreifungsband 1 ausgangsseitig der Profilierungseinrichtung 6a, 6b über eine treppenartige bzw. streifenartige Oberflächenprofilierung 13, 14.

Die Materialdicke B des Streifenbandes 1 liegt dabei im Bereich von ca. 1,2 bis 1,5 mm. Da zwischen einzelnen Erhebungen 13 des Streifenbandes korrespondierende Nuten oder Vertiefungen 14 auf diese Weise realisiert sind bzw. realisiert werden können, lässt sich der Materialverbrauch für ein derartiges Streifenband 1 im Vergleich zu einem Streifenband mit durchgängigem Querschnitt unter Berücksichtigung einer Materialdicke B um mehr als 10 % verringern. Zugleich werden vergleichbare mechanische Eigenschaften beobachtet, weil die Erhebungen 13 in Verbindung mit den Vertiefungen 14 insgesamt eine Oberflächenprägung bzw. die Oberflächenprofilierung 13, 14 des Streifenbandes 1 zur Verfügung stellen, welche seine Steifigkeit erhöht.

Neben den mit Bezug zur Fig. 3 beschriebenen treppenartigen oder streifenartigen Oberflächenprofilierungen 13, 14 lassen sich mit Hilfe der Profilierwalzen 6a, 6b ergänzend auch rautenförmige Profilierungen realisieren, beispielsweise kopfseitig der jeweiligen Erhebungen 13. Das ist im Detail jedoch nicht dargestellt. Zu diesem Zweck ist es lediglich erforderlich, dass die Bereiche der Profilierwalzen 6a, 6b zwischen den einzelnen Rippen 10 eine die angesprochene Profilierung bewirkende Prägung aufweisen.

Anhand der Fig. 1 erkennt man, dass der Profilierungseinrichtung 6a, 6b eine Arrondiervorrichtung folgt. Diese Arrondiervorrichtung 15a, 15b setzt sich im Ausführungsbeispiel und ausweislich der Fig. 2A aus jeweils zwei Paaren 15a, 15b sich gegenüberliegenden Arrondierrollen 15a, 15b zusammen. Tatsächlich ist an jeder Längskante 9 des Streifenbandes 1 jeweils ein Paar der sich gegenüberliegenden Arrondierrollen 15a, 15b bzw. jeweils eine Arrondierrolle 15a, 15b angeordnet. Zwischen diesen Paaren 15a, 15b wird das Streifenband 1 hindurchgeführt.

Wie die Profilierwalzen 6a, 6b, so definieren auch die Arrondierrollen 15a, 15b einen zugehörigen Bearbeitungsschlitz 16. Mit Hilfe der Arrondierrollen 15a, 15b wird die Längskante 9 des Streifenbandes 1 in etwa halbkreisförmig abgerundet, wie die verschiedenen Ausführungsbeispiele in den Fig. 2A bis 2D deutlich machen. Im Ausführungsbeispiel erfahren beide Längskanten 9 des Streifenbandes 1 eine entsprechende halbkreisförmige Abrundung. Dabei sind verschiedenen Auslegungen denkbar.

So verfügen die Arrondierrollen 15a, 15b bei dem Ausführungsbeispiel nach der Fig. 2A über jeweils eine senkrechte Achse 17 bzw. rotieren um eine zugehörige senkrechte Achse 17. Demgegenüber ist die Achse bzw. Drehachse der Arrondierrollen 15a, 15b bei den übrigen Varianten der Arrondiervorrichtung entsprechend der Darstellung in den Fig. 2A bis 2D jeweils horizontal angeordnet. Darüber hinaus besteht die Möglichkeit, den Bearbeitungsschlitz 16 jeweils zwischen einer Arrondierrolle 15a, 15b und einem Steg 18 zu definieren, auf welchem das Streifenband 1 mit seinen Längskanten 9 entlang gleitet, wie dies die Fig. 2B und 2D verdeutlichen. Dadurch lassen sich ganz unterschiedliche Querschnittsformen und gewünschte Abrundungen im Bereich der Längskante 9 mit Hilfe der Arrondiervorrichtung umsetzen. Ganz abgesehen davon wird in der Fig. 2A der Bearbeitungsschlitz 16 von den sich gegenüberliegenden Arrondierrollen 15a, 15b vorgegeben.

Anhand der Fig. 2A wird darüber hinaus beispielhaft verdeutlicht, dass die jeweilige Längskante 9 des Umreifungsbandes bzw. Streifenbandes 1 nicht nur abgerundet wird. Sondern die fragliche Längskante 9 erfährt zugleich eine Beaufschlagung mit einer Seitenkraft F. Mit Hilfe dieser Seitenkraft F erfolgt eine Breiteneinstellung des Streifenbandes 1. Dazu ist die Seitenkraft F gegen die Längskante 9 gerichtet und steht auf dieser im Wesentlichen senkrecht auf, und zwar in etwa in einer vom Streifenband 1 aufgespannten Bandebene.

Tatsächlich ist die Auslegung so getroffen, dass die jeweilige Arrondierrolle 15a, 15b eine Seitenkraft F in Richtung auf eine Längssymmetrieebene L des Umreifungsbandes bzw. Streifenbandes 1 auf die zugehörigen Längskanten 9 ausübt. Die an den sich gegenüberliegenden Längskanten 9 angreifenden Seitenkräfte F sind folglich entgegengesetzt zueinander gerichtet und bewirken insgesamt eine Stauchung des Streifenbandes 1 im Hinblick auf seine Breite S.

Tatsächlich wird die fragliche Seitenkraft F beispielsweise mit Hilfe einer an einer Basis abgestützten Feder auf die jeweilige Arrondierrolle 15a, 15b ausgeübt. Im Rahmen des Ausführungsbeispiels sind jedoch jeweils Stelltriebe an die zugehörigen Arrondierrollen 15a, 15b angeschlossen, um die dargestellte Seitenkraft F auf die zugehörige Längskante 9 des Streifenbandes 1 ausüben zu können. Die Stelltriebe können ebenso wie eine Sensoreinrichtung zur Messung der Breite S des Streifenbandes 1 an eine nicht dargestellte Steuereinheit angeschlossen sein.

Mit Hilfe der Sensoreinrichtung wird stromaufwärts der Arrondiervorrichtung 15a, 15b die aktuelle Breite S des Streifenbandes bzw. Umreifungsbandes 1 erfasst und an die Steuereinheit übergeben. Die Steuereinheit beaufschlagt als Folge hiervon im Zuge einer Regelung und unter Berücksichtigung von abgelegten Vorgaben zur Breite S die die Arrondierrollen 15a, 15b entsprechend beaufschlagenden Stelltriebe. Als Ergebnis dieser Beaufschlagung steht ausgangsseitig der Arrondiervorrichtung das Umreifungsband bzw. Streifenband 1 mit einer Breite S zur Verfügung, welche über die Länge des Streifenbandes 1 gesehen Abweichungen von weniger als ± 0,1 mm aufweist. Das heißt, das Streifenband bzw. Umreifungsband 1 wird nicht nur abgerundet, sondern erfährt zugleich die bereits beschriebene Beaufschlagung mit der Seitenkraft F, und zwar zur Breiteneinstellung des Streifenbandes 1.

Wie bereits beschrieben, wird das Umreifungsband bzw. Streifenband 1 nach der Extrusion zunächst gereckt, dann profiliert und im Anschluss daran an den jeweiligen Längskanten 9 abgerundet sowie mit der Seitenkraft F zur Breiteneinstellung beaufschlagt. Grundsätzlich kann aber auch auf den beschriebenen Reckvorgang und die Profilierung verzichtet werden. Dann wird das den Extruder 2 verlassene Streifenband 1 unmittelbar an wenigstens einer Längskante 9 abgerundet, im Ausführungsbeispiel an beiden sich gegenüberliegenden Längskanten 9. Hierfür sorgt die Arrondiervorrichtung.

## Patentansprüche

1. Verfahren zum Herstellen eines Umreifungsbandes (1) aus Kunststoff mit folgenden Schritten:
1.1) Granulat des eingesetzten Kunststoffes wird erhitzt und in Längsrichtung zu einem Streifenband (1) extrudiert;
1.2) das Streifenband (1) wird an beiden Längskanten (9) abgerundet und dazu
1.3) zwischen wenigstens einem Paar sich gegenüberliegender Arrondierrollen (15a, 15b) hindurchgeführt, wobei
1.4) das Streifenband (1) zum Zeitpunkt der Abrundung seiner Längskanten (9) noch nicht vollständig abgekühlt ist, sondern vielmehr eine Temperatur nach dem Extrusionsvorgang von 50°C, bis 100°C aufweist, welche die Abrundung an den Längskanten (9) begünstigt bzw. erst ermöglicht.

2. Verfahren nach Anspruch 1, **dadurch gekennzeichnet, dass** die jeweilige Längskante (9) in etwa halbkreisförmig abgerundet wird.

3. Verfahren nach Anspruch 1 oder 2, **dadurch gekennzeichnet, dass** die jeweilige Längskante (9) nicht nur abgerundet wird, sondern zugleich eine Beaufschlagung mit einer Seitenkraft (F) zur Einstellung der Breite (S) des Streifenbandes (1) erfährt.

4. Verfahren nach Anspruch 3, **dadurch gekennzeichnet, dass** die Seitenkraft (F) als elastische Gegenkraft einer Feder gegenüber der hieran entlang geführten Längskante (9) wirkt.

5. Verfahren nach einem der Ansprüche 1 bis 4, **dadurch gekennzeichnet, dass** das Streifenband (1) vor und/oder nach und/oder während der Abrundung seiner jeweiligen Längskante (9) an wenigstens einer Oberfläche profiliert wird.

6. Vorrichtung zur Durchführung des Verfahrens nach einem Ansprüche 1 bis 5, mit zumindest einem Extruder (2) für darin erschmolzenes Granulat aus Kunststoff, welches zu einem Streifenband (1) extrudiert wird, und mit wenigstens einer Arrondiervorrichtung zur Abrundung des Streifenbandes (1) an beiden Längskanten (9), wobei die Arrondiervorrichtung zumindest ein Paar sich gegenüberliegender Arrondierrollen (15a, 15b) aufweist, zwischen denen das Streifenband (1) hindurchgeführt wird, und wobei Mittel vorgesehen sind um eine Temperatur des Streifenbandes von 50°C bis 100°C zum Zeitpunkt des Abrundung der Längskanten (9) zu erreichen.

7. Vorrichtung nach Anspruch 6, **dadurch gekennzeichnet, dass** die Arrondierrollen (15a, 15b) federelastisch an einer jeweiligen Basis abgestützt sind.

8. Vorrichtung nach Anspruch 6 oder 7, **dadurch gekennzeichnet, dass** den Arrondierrollen (15a, 15b) jeweilige Stelltriebe und eine Steuereinheit zugeordnet sind, um das Streifenband (1) hinsichtlich seiner Breite (S) im Zuge einer Steuerung oder Regelung einstellen zu können.

## Claims

1. A method for producing a strapping tape (1) made from plastics, comprising the following steps:
1.1) granules of the plastics used are heated and extruded in the longitudinal direction to form a strip tape (1);
1.2) the tape strip (1) is rounded off at both longitudinal edges (9), and for this purpose
1.3) is fed through at least on pair of opposing rounding-off rollers (15a, 15b), wherein
1.4) the tape strip (1), at the time of rounding off its longitudinal edges (9), is not completely cooled down yet, but rather has a temperature after the extrusion process of 50 °C to 100 °C, which facilitates the rounding off at the longitudinal edges (9) and/or makes it possible in the first place.

2. The method according to claim 1, **characterized in that** the respective longitudinal edge (9) is rounded off approximately semicircular.

3. The method according to claim 1 or 2, **characterized in that** the respective longitudinal edge (9) is not only rounded-off, but, at the same time, is acted on by a lateral force (F) for setting the width (S) of the tape strip (1).

4. The method according to claim 3, **characterized in that** the lateral force (F) acts as elastic counter-force of a spring with respect to the longitudinal edge (9) guided along said spring.

5. The method according to any one of claims 1 to 4, **characterized in that** prior to and/or after and/or during the rounding off of its respective longitudinal edge (9), the tape strip (1) is profiled on at least one surface.

6. A device for carrying out the method according to any one of claims 1 to 5, comprising at least one extruder (2) for granules from plastics which are melted therein and extruded to form a tape strip (1), and comprising at least one rounding-off device for rounding off the tape strip (1) at both longitudinal edges (9), wherein the rounding-off device has at least one pair of opposing rounding-off rollers (15a, 15b) between which the tape strip (1) is fed through, and wherein means are provided for reaching a temperature of the tape strip of 50 °C to 100 °C at the time of rounding off the longitudinal edges (9).

7. The device according to claim 6, **characterized in that** the rounding-off rollers (15a, 15b) are elastically supported on a respective base.

8. The device according to claim 6 or 7, **characterized in that** respective actuators and a control unit are associated with the rounding-off rollers (15a, 15b) in order to be able to set the tape strip (1) in its width (S) by means of controlling or closed-loop controlling.

## Revendications

1. Procédé pour la fabrication d'une bande de cerclage (1) en matière plastique avec les étapes suivantes :
1.1) le granulat de la matière plastique mise en oeuvre est chauffé et extrudé dans une direction longitudinale en une bande (1),
1.2) la bande (1) est arrondie aux deux arêtes longitudinales (9) et à cet effet
1.3) passée entre au moins une paire de rouleaux d'arrondissage (15a, 15b) s'opposant, pour lequel
1.4) la bande (1) n'est pas encore complètement refroidie au moment de l'arrondissage de ses arêtes longitudinales (9), mais comporte plutôt une température après l'opération d'extrusion de 50 °C à 100 °C, laquelle favorise ou permet seulement l'arrondissage aux arêtes longitudinales (9).

2. Procédé selon la revendication 1, **caractérisé en ce que** l'arête longitudinale (9) respective est ar-rondie en une forme à peu près semi-circulaire.

3. Procédé selon la revendication 1 ou 2, **caractérisé en ce que** l'arête longitudinale (9) respective n'est pas seulement arrondie mais subit simultanément une application d'une force latérale (F) pour régler la largeur (S) de la bande (1).

4. Procédé selon la revendication 3, **caractérisé en ce que** la force latérale (F) agit en tant que force antagoniste élastique d'un ressort vis-à-vis de l'arête longitudinale (9) guidée le long de celle-ci.

5. Procédé selon l'une quelconque des revendications 1 à 4, **caractérisé en ce que** la bande (1) avant et/ou après et/ou pendant l'arrondissage de ses arêtes longitudinales (9) respectives est profilée sur au moins une surface.

6. Dispositif pour exécuter le procédé selon l'une quelconque des revendications 1 à 5 avec au moins une extrudeuse (2) pour le granulat de plastique fondu dedans, lequel est extrudé en une bande (1) et avec au moins un dispositif d'arrondissage pour arrondir la bande (1) aux deux arêtes longitudinales (9), pour lequel le dispositif d'arrondissage comporte au moins une paire de rouleaux d'arrondissage (15a, 15b) s'opposant, entre lesquels est passée la bande (1) et pour lequel des moyens sont prévus pour atteindre une température de la bande de 50 °C à 100 °C au moment de l'arrondissage des arêtes longitudinales (9).

7. Dispositif selon la revendication 6, **caractérisé en ce que** les rouleaux d'arrondissage (15a, 15b) sont soutenus avec l'élasticité d'un ressort sur une base correspondante.

8. Dispositif selon la revendication 6 ou 7, **caractérisé en ce que** des commandes de réglage et une unité de commande sont attribuées aux rouleaux d'arrondissage (15a, 15b) pour pouvoir régler la bande (1) concernant sa largeur (S) au cours d'un pilotage ou d'un réglage.
